(19) Europäisches Patentamt
European Patent Office
Office européen des brevets

(11) EP 2 998 848 B1

(12) **EUROPEAN PATENT SPECIFICATION**

(45) Date of publication and mention
of the grant of the patent:
**06.02.2019 Bulletin 2019/06**

(51) Int Cl.:
***G06F 3/0484*** (2013.01)   ***G06F 1/16*** (2006.01)

(21) Application number: **14797656.7**

(22) Date of filing: **25.04.2014**

(86) International application number:
**PCT/CN2014/076197**

(87) International publication number:
**WO 2014/183546 (20.11.2014 Gazette 2014/47)**

(54) **METHOD, DEVICE, AND APPARATUS FOR CONTROLLING SCREEN ROTATION**

VERFAHREN, VORRICHTUNG UND MASCHINE ZUR STEUERUNG EINER BILDSCHIRMROTATION

PROCÉDÉ, DISPOSITIF, ET APPAREIL DE CONTRÔLE DE LA ROTATION D'UN ÉCRAN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2013 CN 201310184731**

(43) Date of publication of application:
**23.03.2016 Bulletin 2016/12**

(73) Proprietor: **Xiaomi Inc.**
**Beijing 100085 (CN)**

(72) Inventors:
• **LI, Shen**
**Beijing 100085 (CN)**
• **JIN, Fan**
**Beijing 100085 (CN)**
• **ZHANG, Yuwen**
**Beijing 100085 (CN)**

(74) Representative: **Reeve, Nicholas Edward**
**Reddie & Grose LLP**
**The White Chapel Building**
**10 Whitechapel High Street**
**London E1 8QS (GB)**

(56) References cited:
**EP-A1- 2 383 627         CN-A- 102 118 488**
**CN-A- 102 662 596     CN-A- 102 929 406**
**CN-A- 102 929 406     CN-A- 103 294 358**
**US-A1- 2009 237 420     US-A1- 2013 113 836**

**Description**

**CROSS-REFERENCE TO RELATED APPLICATIONS**

**TECHNICAL FIELD**

The present disclosure generally relates to the field of mobile terminals, and more particularly, to a method for controlling rotation of a screen and a device and an apparatus thereof.

**BACKGROUND**

Nowadays, mobile phones, tablet computers and other mobile terminals, which may provide photo viewing, Internet accessing, games and other functions, have become necessities of daily life.

In order to provide better user experience, typically, a mobile terminal is provided with a built-in gravity sensor through which a current posture of the terminal may be acquired, and the following logic is performed: when the mobile terminal is positioned in or close to a standard posture (i.e. a screen of the mobile terminal is positioned in a state perpendicular to a horizontal plane), the screen is a forward vertical screen; and when rotation of the posture of the mobile terminal takes place, the screen is rotated accordingly, switching a screen-display direction to a leftward horizontal screen, a backward vertical screen or a rightward horizontal screen.

For example, when a user is browsing a horizontally-taken picture, the horizontally-taken picture may be displayed horizontally in full screen by rotating the mobile phone, to improve the utilization of the screen.

However, since the user will not always maintain an upright posture when watching the screen of the mobile terminal, the conventional method for rotating the screen often causes a problem such as follows: if the user browses a picture when lying on the bed, making the mobile phone be in a horizontal state, the screen of the mobile phone will be then rotated, which is not actually desired for the user. Therefore, the current rules for rotating the screen are fixedly set by supposing that the user watches the screen in an upright posture, as a standard, which often causes the screen of the mobile terminal to rotate undesirably, thus affecting the user experience. EP2383627 relates to a computer device configured to perform a predetermined operation in accordance with a change in a tilt position of the computer device from a reference tilt position.

**SUMMARY OF THE INVENTION**

Embodiments of the present disclosure provide a method for controlling rotation of a screen and a device and an apparatus thereof, which may determine rotation of a screen by comparing postures of a mobile phone, to avoid undesirable rotation of the screen-display direction and improve the user experience.

According to a first aspect of embodiments of the present disclosure, there is provided a method in accordance with claim 1.

Preferably, the initial posture or the real-time posture of the mobile terminal is expressed by gravity acceleration components of the mobile terminal in X and Y directions; and the acquiring an initial posture of the mobile terminal is performed by: acquiring and recording gravity acceleration components X0 and Y0 of the mobile terminal in the X and Y directions, and determining the initial posture of the mobile terminal according to X0 and Y0, wherein, when the mobile terminal is positioned horizontally, the X direction is a horizontally rightward direction along the mobile terminal, and the Y direction is a horizontally frontward direction along the mobile terminal.

Preferably, the monitoring a real-time posture of the mobile terminal in real time is performed by: monitoring gravity acceleration components X1 and Y1 of the mobile terminal in the X and Y directions in real time; and determining the real-time posture of the mobile terminal according to X1 and Y1.

Preferably, entering a full-screen display state includes one of: entering a large-picture viewing mode, entering a full-screen game mode, and entering a mode for browsing a webpage in full-screen.

According to a second aspect of embodiments of the present disclosure, there is provided a device in accordance with claim 5.

Preferably, the initial posture or the real-time posture of the mobile terminal is expressed by gravity acceleration components of the mobile terminal in X and Y directions; and the posture acquiring module includes: a locking unit, configured to, when the screen of the mobile terminal enters the full-screen display state, lock the screen-display direction of the mobile terminal; and a posture acquiring unit, configured to acquire and record gravity acceleration components X0 and Y0 of the mobile terminal in the X and Y directions, and determine the initial posture of the mobile terminal according to X0 and Y0, wherein, when the mobile terminal is positioned horizontally, the X direction is a horizontally rightward direction along the mobile terminal, and the Y direction is a horizontally frontward direction along the mobile terminal.

Preferably, the monitoring module includes: a gravity-acceleration-component acquiring unit, configured to monitor gravity acceleration components X1 and Y1 of the mobile terminal in the X and Y directions in real time; and a real-time-posture determining unit, configured to determine the real-time posture of the mobile terminal according to X1 and Y1.

Preferably, entering a full screen display state includes one of: entering a large-picture viewing mode, entering a full-screen game mode, and entering a mode for browsing a webpage in full-screen.

According to a further aspect of the embodiments of the present disclosure, there is provided a computer program, which when executing on a processor of a mobile terminal for controlling rotation of a screen, performs a method according to the first aspect of embodiments of the present disclosure.

It is to be understood that both the foregoing general description and the following detailed description are exemplary and explanatory only and are not restrictive of the invention.

The advantageous effects brought by the technical solutions according to the embodiments of the present disclosure include the following.

With the method for rotating a screen and the device and the apparatus thereof provided by the embodiments of the present disclosure, a posture of the mobile terminal when the screen enters a full-screen display state is take as an initial posture, and during a real-time change of the posture of the mobile terminal, it is judged whether to rotate the screen-display direction by taking the initial posture as a reference posture. Since in the present disclosure, the reference posture for rotating of the screen is not fixedly a vertical state, but depends on the posture when the screen enters a full-screen display state, therefore, it may avoid undesirably rotating the screen-display direction, and the user utilization efficiency and user experience may be improved.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig.1 is a flow chart of a method for controlling rotation of a screen according to an exemplary embodiment;

Fig.2 is a flow chart of a method for controlling rotation of a screen according to another exemplary embodiment;

Fig.3 is a schematic diagram of a mobile phone posture of a forward vertical screen according to an exemplary embodiment;

Fig.4 is a schematic diagram of a mobile phone posture of a leftward horizontal screen according to an exemplary embodiment;

Fig.5 is a schematic diagram of a mobile phone posture of a backward vertical screen according to an exemplary embodiment;

Fig.6 is a schematic diagram of a mobile phone posture of a rightward horizontal screen according to an exemplary embodiment;

Fig.7 is a schematic diagram of acquiring an initial posture of a mobile phone when a user lies rightward and a large-picture viewing mode is entered, according to an exemplary embodiment;

Fig.8 is a schematic diagram of processing a screen direction when a mobile phone initially enters a full-screen state, according to an exemplary embodiment;

Fig.9 is a schematic diagram of adjusting a screen-display direction of a mobile phone to a rightward horizontal screen when a real-time posture of the mobile phone is a forward vertical screen, according to an exemplary embodiment;

Fig.10 is a schematic diagram of adjusting a screen-display direction of a mobile phone to a leftward horizontal screen when a real-time posture is a backward vertical screen, according to an exemplary embodiment;

Fig.11 is a block diagram of a device for controlling rotation of a screen according to an exemplary embodiment;

Fig.12 is a block diagram of a posture acquiring module in a device for controlling rotation of a screen according to an exemplary embodiment;

Fig.13 is a block diagram of a monitoring module in a device for controlling rotation of a screen according to an exemplary embodiment;

Fig.14 is a block diagram of another device for controlling rotation of a screen according to an exemplary embodiment; and

Fig.15 is a block diagram of a controlling module in a device for controlling rotation of a screen according to an exemplary embodiment.

## DETAILED DESCRIPTION

Hereinafter, specific embodiments of a method for controlling rotation of a screen and a device and an apparatus thereof provided by embodiments of the present disclosure are described in detail.

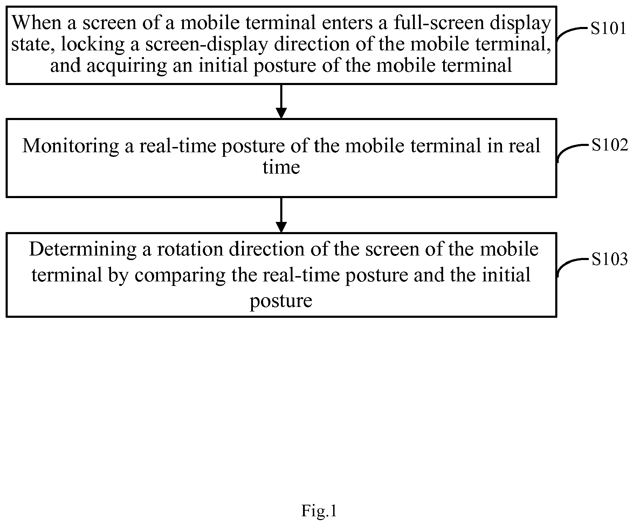

Firstly, as shown in Fig.1, a method for controlling rotation of a screen is provided by an embodiment of the present disclosure, including the following steps.

In step S101, when a screen of a mobile terminal enters a full-screen display state, a screen-display direction of the mobile terminal is locked, and an initial posture of the mobile terminal is acquired.

As a preferred implementation, the initial posture or a real-time posture of the mobile terminal is expressed by gravity acceleration components of the mobile terminal in X and Y directions.

Preferably, the step S101 may be performed by:

acquiring and recording gravity acceleration components X0 and Y0 of the mobile terminal in the X and Y directions, and determining the initial posture of the mobile terminal according to X0 and Y0,

wherein, when the mobile terminal is positioned horizontally, the X direction is a horizontally rightward direction along the mobile terminal, and the Y direction is a horizontally frontward direction along the mobile terminal.

Preferably, after the step S101, the method may further include:

determining a correction value for a screen-layout-style identifier of the mobile terminal according to the initial posture of the mobile terminal,

wherein the screen-layout-style identifier is configured to identify a screen-display direction of the mobile terminal, and the screen-display direction of the mobile terminal includes a forward vertical screen, a leftward horizontal screen, a backward vertical screen and a rightward horizontal screen.

In S102, a real-time posture of the mobile terminal is monitored in real time.

As a preferred implementation, the step S102 may be performed by:

monitoring gravity acceleration components X1 and Y1 of the mobile terminal in the X and Y directions in real time; and determining the real-time posture of the mobile terminal according to X1 and Y1.

In S103, a rotation direction of the screen of the mobile terminal is determined by comparing the real-time posture and the initial posture.

As a preferred implementation, the step S103 may be performed by:

determining the screen-layout-style identifier of the mobile terminal according to the real-time posture;
correcting the screen-layout-style identifier of the mobile terminal according to the correction value, to obtain a corrected screen-layout-style identifier; and
when the corrected screen-layout-style identifier is different from the screen-layout-style identifier before the correcting, rotating a direction of the screen of the mobile terminal according to a direction identified by the corrected screen-layout-style identifier.

With the method for rotating a screen provided by the embodiments of the present disclosure, a posture of the mobile terminal when the screen enters a full-screen display state is taken as an initial posture, and during a real-time change of the posture of the mobile terminal, it is judged whether to rotate the screen-display direction by taking the initial posture as a reference posture. Since in the present disclosure, the reference posture for rotating of the screen is not fixedly a vertical state, but depends on the posture when the screen enters a full-screen display state, therefore, it may avoid undesirably rotating the screen-display direction, and the user experience may be improved.

A method for controlling rotation of a screen is also provided by an embodiment of the present disclosure, through which an undesirable rotation of a screen-display direction may be prevented. The method may be implemented in an operating system of a mobile terminal, and may also be implemented in any application installed in a mobile terminal.

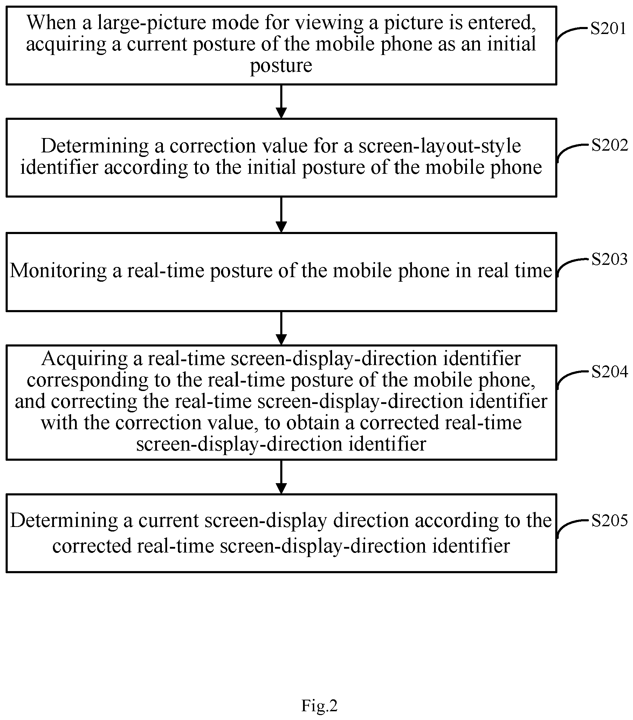

For easy illustration, in the present embodiment, for example, a user is browsing a picture in an album through a mobile phone. As shown in Fig.2, the method includes the following steps.

In step S201, when a large-picture mode for viewing a picture is entered, a current posture of the mobile phone is acquired as an initial posture.

As a preferred implementation, in the present embodiment, the posture of the mobile phone in a three-dimensional space is expressed by gravity acceleration components in both X-axis and Y-axis directions recorded by a gravity sensor.

Wherein, when the mobile phone is positioned horizontally, the X direction is a horizontally rightward direction along the mobile phone, the Y direction is a horizontally frontward direction along the mobile phone, and the X direction is perpendicular to the Y direction in a horizontal plane.

In the embodiment of the present disclosure, the posture of the mobile phone includes four kinds of postures: a forward vertical screen, a leftward horizontal screen, a backward vertical screen and a rightward horizontal screen.

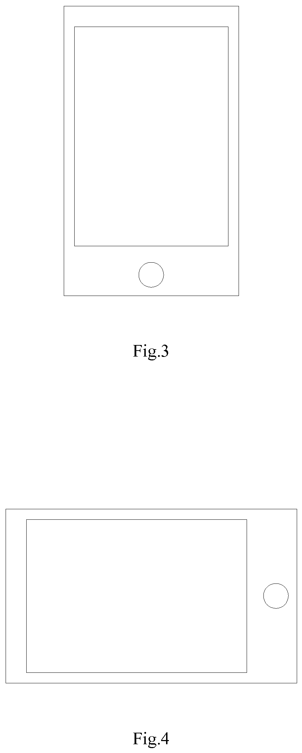

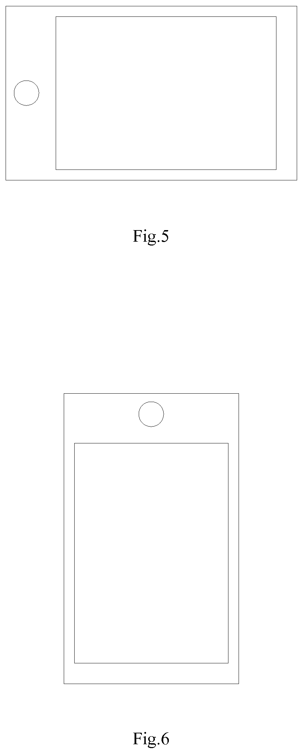

As shown in Figs.3-6, schematic diagrams of the four kinds of postures of the mobile phone are illustrated respectively.

A means for acquiring the initial posture of the mobile phone is described as follows, where, for example, the acquired gravity acceleration components of the mobile phone in X and Y directions are respectively X0 and Y0.

when X0>P, the posture of the mobile phone is determined as a leftward horizontal screen;

when X0<-P, the posture of the mobile phone is determined as a rightward horizontal screen;

when Y0>P, the posture of the mobile phone is determined as a forward vertical screen; and

when Y0<-P, the posture of the mobile phone is determined as a backward vertical screen.

Wherein a value of P may be taken based on experience, or may be set as required by judgment accuracy. In the present embodiment, it may be, for example, 5m/s^2.

It should be noted that, in the present embodiment, the posture of the mobile phone is recorded by a gravity sensor for example. In practical practice of the present solution, the current posture of the mobile phone may be judged by other sensors (such as an acceleration sensor, a direction sensor, etc.).

Hereinafter, an example is illustrated where the current posture of the mobile phone is judged by a direction sensor.

The direction sensor is implemented by packaging an acceleration sensor, by packaging the acceleration sensor, the direction sensor may return an angle value, *rotation,* and the initial posture of the mobile phone may be judged by *rotation:*

a) when it meets rotation>=0 && rotation <45 ∥ rotation >=315 && rotation <360, the posture of the mobile phone is a forward vertical screen;

b) when it meets rotation>=45 && rotation <135, the posture of the mobile phone is a rightward horizontal screen;

c) when it meets rotation>=135 && rotation <225, the posture of the mobile phone is a backward vertical screen; and

d) when rotation>=225 && rotation <315 is satisfied, the posture of the mobile phone is a leftward horizontal screen.

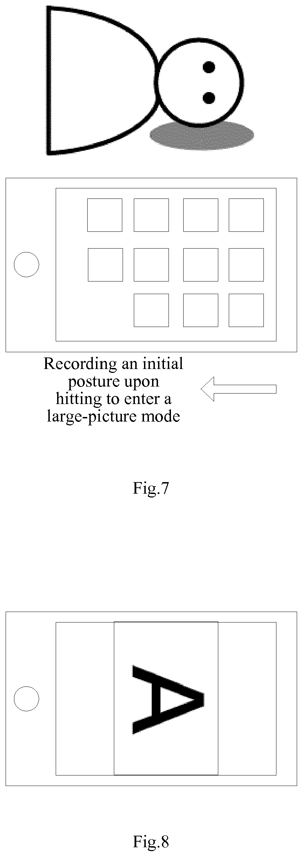

In the present embodiment, as shown in Fig.7, for example, when a user lies rightward, and at this time, the user hits a picture to make the picture enters a large-picture mode, a rightward horizontal screen be acquired as the initial posture of the mobile phone may.

As shown in Fig.8, at an initial state, after the display screen of the mobile phone enters a full-screen display state for a picture, the initial screen-display direction of the mobile phone is locked without a rotation.

In addition, the present embodiment is illustrated by viewing a picture for example. In practical application, it may be applied to other applications which may require for full-screen display, such as:

a full-screen game, browsing a webpage in full-screen, etc.

Correspondingly, the step S201 may be replaced by:

when the game is entered, acquiring the current posture of the mobile phone as an initial posture; or

when a mode for browsing a webpage in full-screen is enabled, acquiring the current posture of the mobile phone as an initial posture.

In S202, a correction value for a screen-layout-style identifier is determined according to the initial posture of the mobile phone.

Preferably, for example in an Android system,

the above screen-layout-style identifier (mCurrentOrientation) is configured to represent a layout of the screen-display direction. The operating system of the mobile phone determines the display direction of the screen by reading out the screen-layout-style identifier.

It should be noted that, in the present embodiment, the screen-display direction takes a forward direction of the screen of the mobile phone as a reference direction.

The above correction value is used to correct the screen-layout-style identifier, to avoid an undesirable rotation of the screen-display screen of the mobile phone.

For example, it may be set as follows:

when the initial posture of the mobile phone is a forward vertical screen, mCurrentOrientation=0; and the correction value mFixOrientation = 0;

when the initial posture of the mobile phone is a rightward horizontal screen, mCurrentOrientation=1; and the correction value mFixOrientation = 3;

when the initial posture of the mobile phone is a backward vertical screen, mCurrentOrientation=2; and the correction value mFixOrientation = 2; and

when the initial posture of the mobile phone is a leftward horizontal screen, mCurrentOrientation=3; and the correction value mFixOrientation = 1.

In step S203, a real-time posture of the mobile phone is monitored in real time.

Preferably, the step S203 may be performed by:

acquiring gravity acceleration components X1 and Y1 of the mobile phone in X and Y directions at a preset time period (1ms, for example), and determining the real-time posture of the mobile terminal according to X1 and Y1.

Wherein the method for judging the real-time posture of the mobile phone is same with the method for judging the initial posture of the mobile phone in step S201, which will not be repeated herein.

In step S204, a real-time screen-display-direction identifier corresponding to the real-time posture of the mobile phone is acquired, and the real-time screen-display-direction identifier is corrected with the correction value, to obtain a corrected real-time screen-display-direction identifier.

Preferably, according to the related art, for each real-time posture of the mobile phone, the system may calculate to obtain a real-time screen-display-direction identifier corresponding to the real-time posture, and control the display direction of the screen according to the identifier. However, since the user will not always maintain an upright posture when watching the screen, an undesirable rotation may occur in the related art. Therefore, in this step, a correction is performed with a correction value, so the undesirable rotation may be avoided.

Preferably, the real-time screen-display-direction identifier is corrected through the following equation:

$$mCurrentOrientation = (mCurrentOrientation + mFixOrientation)\ \%\ 4,$$

wherein, on the left of the equation, mCurrentOrientation denotes the corrected real-time screen-display-direction identifier, and on the right of the equation, mCurrentOrientation denotes the real-time screen-display-direction identifier obtained by the system, mFixOrientation denotes the correction valued obtained according to the initial posture of the mobile phone.

In S205, a current screen-display direction is determined according to the corrected real-time screen-display-direction identifier.

Preferably, the corrected real-time screen-display-direction identifier is sent to the system, and the system may obtain the current screen-display direction according to the corrected real-time screen-display-direction identifier.

When the corrected real-time screen-display-direction identifier is different from a direction calculated when the mobile phone is in a previous posture, the screen direction is adjusted, by rotating the screen, to a screen-display direction corresponding to the corrected real-time screen-display-direction identifier.

When the corrected real-time screen-display-direction identifier is same with the direction calculated when the mobile phone is in the previous posture, the screen-display direction is maintained without a rotation.

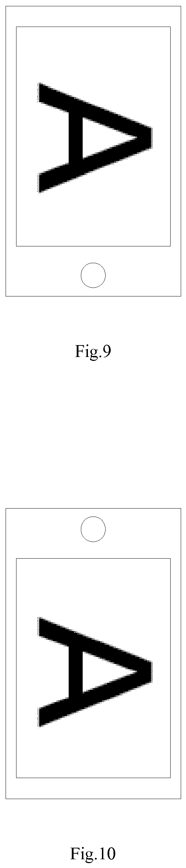

As shown in Fig.9, when the real-time posture of the mobile phone is a forward vertical screen, the screen-display direction of the mobile phone is adjusted to a rightward horizontal screen (taking a forward direction of the screen of the mobile phone as a reference direction).

As shown in Fig.10, when the real-time posture of the mobile phone is a backward vertical screen, the screen-display direction of the mobile phone is adjusted to a leftward horizontal screen (taking a forward direction of the screen of the mobile phone as a reference direction).

In practical operation, apparently, when the user views a picture lying rightward, the rotation as shown in Figs.9 and 10 meets the user experience best.

Preferably, after the step S206, the method also includes:

when the user exits from the large-picture mode, canceling the set of the initial posture of the mobile phone. When the user enters the large-picture mode for a next time, an initial posture of the mobile phone is acquired again.

Wherein exiting from the large-picture mode does not include exiting from the large-picture mode via a Home button. Exiting via a Home button is generally a temporary interruption of picture browsing, thus, when the large-picture mode is entered again, the previous user experience should be resumed, without calculating the correction value by acquiring the initial posture again, that is, the previous correction value may be still used.

With the method for rotating a screen provided by the embodiments of the present disclosure, by taking a posture of the mobile phone when a full-screen display state is entered as an initial posture, providing a correction value for each initial posture, and correcting an identifier for identifying the screen-display direction of the mobile phone provided by the system, it may prevent an undesirable rotation of the screen, and the user experience may be improved.

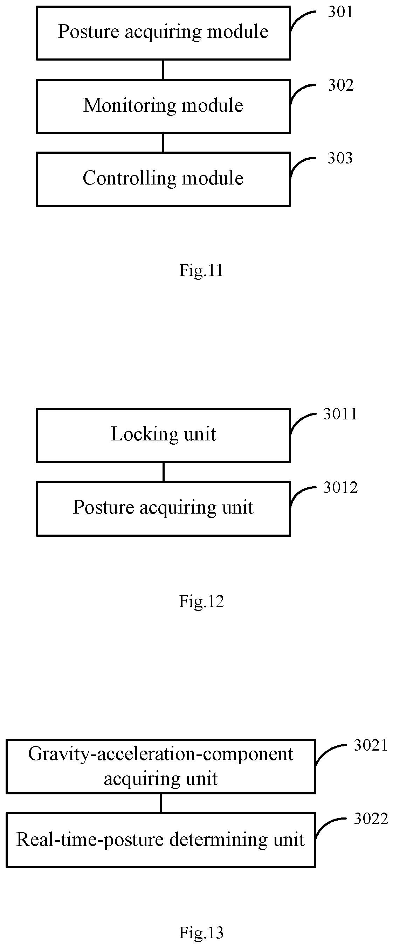

As shown in Fig.11, a device for controlling rotation of a screen is provided by an embodiment of the present disclosure, including:

a posture acquiring module 301, configured to, when a screen of a mobile terminal enters a full-screen display state, lock a screen-display direction of the mobile terminal, and acquire an initial posture of the mobile terminal;
a monitoring module 302, configured to monitor a real-time posture of the mobile terminal in real time; and
a controlling module 303, configured to determine a rotation direction of the mobile terminal by comparing the real-time posture and the initial posture.

Preferably, the initial posture or the real-time posture of the mobile terminal is expressed by gravity acceleration components of the mobile terminal in X and Y directions.

As shown in Fig.12, the posture acquiring module 301 includes:

a locking unit 3011, configured to, when the screen of the mobile terminal enters the full-screen display state, lock the screen-display direction of the mobile terminal; and
a posture acquiring unit 3012, configured to acquire and record gravity acceleration components X0 and Y0 of the mobile terminal in the X and Y directions, and determine the initial posture of the mobile terminal according to X0 and Y0,
wherein, when the mobile terminal is positioned horizontally, the X direction is a horizontally rightward direction along the mobile terminal, and the Y direction is a horizontally frontward direction along the mobile terminal.

Preferably, as shown in Fig.13, the monitoring module 302 includes:

a gravity-acceleration-component acquiring unit 3021, configured to monitor gravity acceleration components X1 and Y1 of the mobile terminal in the X and Y directions in real time; and
a real-time-posture determining unit 3022, configured to determine the real-time posture of the mobile terminal according to X1 and Y1.

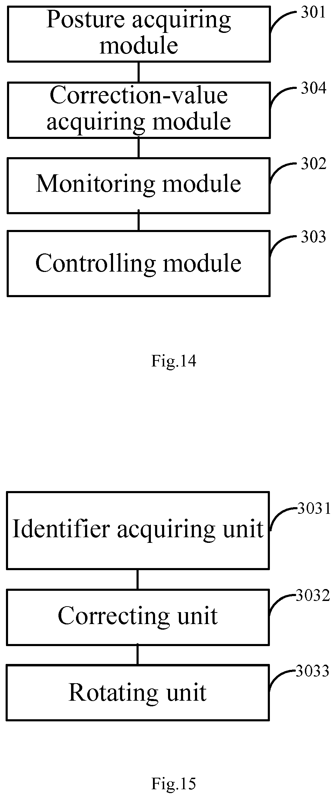

Preferably, as shown in Fig.14, the device further includes:

a correction-value acquiring module 304, configured to, after the acquiring module 301acquires the initial posture of the mobile terminal, determine a correction value for a screen-layout-style identifier of the mobile terminal according to the initial posture of the mobile terminal,
wherein the screen-layout-style identifier is configured to identify a screen-display direction of the mobile terminal, the screen-display direction of the mobile terminal including a forward vertical screen, a leftward horizontal screen, a backward vertical screen and a rightward horizontal screen.

Preferably, as shown in Fig.15, the controlling module 303 includes:

an identifier acquiring unit 3031, configured to determine the screen-layout-style identifier of the mobile terminal according to the real-time posture;
a correcting unit 3032, configured to correct the screen-layout-style identifier of the mobile terminal according to the correction value, to obtain a corrected screen-layout-style identifier; and
a rotating unit 3033, configured to, when the corrected screen-layout-style identifier is different from the screen-layout-style identifier before the correcting, rotate a direction of the screen of the mobile terminal according to a direction identified by the corrected screen-layout-style identifier.

With the device for rotating a screen provided by the embodiments of the present disclosure, a posture of the mobile terminal when the screen enters a full-screen display state is taken as an initial posture, and during a real-time change of the posture of the mobile terminal, it is judged whether to rotate the screen-display direction by taking the initial posture as a reference posture. Since in the present disclosure, the reference posture for rotating of the screen is not fixedly a vertical state, but depends on the posture when the screen enters a full-screen display state, therefore, it may avoid undesirably rotating the screen-display direction, and the user experience may be improved.

In addition, an apparatus is provided by an embodiment of the present disclosure, and the apparatus includes:

one or more processors;
a memory;

a display screen; and
one or more modules, stored in the memory and configured to be executed by one or more processors, wherein the one or more modules have the following functions:
when the display screen enters a full-screen display state, locking a screen-display direction of the display screen, and acquiring an initial posture of the apparatus;
monitoring a real-time posture of the apparatus in real time; and
determining a rotation direction of the display screen by comparing the real-time posture and the initial posture.

Preferably, the initial posture or the real-time posture of the apparatus is expressed by gravity acceleration components of the apparatus in X and Y directions; and
the acquiring an initial posture of the apparatus is performed by:

acquiring and recording gravity acceleration components X0 and Y0 of the apparatus in the X and Y directions, and determining the initial posture of the apparatus according to X0 and Y0,
wherein, when the apparatus is positioned horizontally, the X direction is a horizontally rightward direction along the apparatus, and the Y direction is a horizontally frontward direction along the apparatus.

Preferably, the monitoring a real-time posture of the apparatus in real time is performed by:

monitoring gravity acceleration components X1 and Y1 of the apparatus in the X and Y directions in real time; and determining the real-time posture of the apparatus according to X1 and Y1.

Preferably, the one or more modules further have the following functions:

after acquiring an initial posture of the apparatus, determining a correction value for a screen-layout-style identifier of the apparatus according to the initial posture of the apparatus,
wherein the screen-layout-style identifier is configured to identify a screen-display direction of the apparatus, the screen-display direction of the apparatus including a forward vertical screen, a leftward horizontal screen, a backward vertical screen and a rightward horizontal screen.

Preferably, the determining a rotation direction of the screen of the apparatus by comparing the real-time posture and the initial posture is performed by:

determining the screen-layout-style identifier of the apparatus according to the real-time posture;
correcting the screen-layout-style identifier of the apparatus according to the correction value, to obtain a corrected screen-layout-style identifier; and
when the corrected screen-layout-style identifier is different from the screen-layout-style identifier before the correcting, rotating a direction of the screen of the apparatus according to a direction identified by the corrected screen-layout-style identifier.

With the apparatus provided by the embodiments of the present disclosure, a posture of the apparatus when the screen enters a full-screen display state is taken as an initial posture, and during a real-time change of the posture of the apparatus, it is judged whether to rotate the screen-display direction by taking the initial posture as a reference posture. Since in the present disclosure, the reference posture for rotating of the screen is not fixedly a vertical state, but depends on the posture when the screen enters a full-screen display state, therefore, it may avoid undesirably rotating the screen-display direction, and the user experience may be improved.
In addition, a non-volatile readable storage medium is also provided by the present embodiment, for storing one or more programs, and when applied to a device with a touch screen, the one or more programs may cause the device to have the following functions.
Preferably, the initial posture or the real-time posture of the device is expressed by gravity acceleration components of the device in X and Y directions; and
the acquiring an initial posture of the device is performed by:

acquiring and recording gravity acceleration components X0 and Y0 of the device in the X and Y directions, and determining the initial posture of the device according to X0 and Y0,
wherein, when the device is positioned horizontally, the X direction is a horizontally rightward direction along the device, and the Y direction is a horizontally frontward direction along the device.

Preferably, the monitoring a real-time posture of the device in real time is performed by:

monitoring gravity acceleration components X1 and Y1 of the device in the X and Y directions in real time; and determining the real-time posture of the device according to X1 and Y1.

Preferably, the one or more modules further have the following functions:

after acquiring an initial posture of the device, determining a correction value for a screen-layout-style identifier of the device according to the initial posture of the device, wherein the screen-layout-style identifier is configured to identify a screen-display direction of the device, the screen-display direction of the device including a forward vertical screen, a leftward horizontal screen, a backward vertical screen and a rightward horizontal screen.

Preferably, the determining a rotation direction of the screen of the device by comparing the real-time posture and the initial posture is performed by:

determining the screen-layout-style identifier of the device according to the real-time posture; correcting the screen-layout-style identifier of the device according to the correction value, to obtain a corrected screen-layout-style identifier; and when the corrected screen-layout-style identifier is different from the screen-layout-style identifier before the correcting, rotating a direction of the screen of the device according to a direction identified by the corrected screen-layout-style identifier.

With the storage medium provided by the embodiments of the present disclosure, after it is applied to a device with a display screen, a posture of the mobile terminal when the screen enters a full-screen display state is taken as an initial posture, and during a real-time change of the posture of the mobile terminal, it is judged whether to rotate the screen-display direction by taking the initial posture as a reference posture. Since in the present disclosure, the reference posture for rotating of the screen is not fixedly a vertical state, but depends on the posture when the screen enters a full-screen display state, therefore, it may avoid undesirably rotating the screen-display direction, and the user experience may be improved.

Through the above description to the embodiments, it can be clearly understood by those skilled in the art that, the embodiments of the present disclosure may be implemented by hardware, or by software working with necessary common hardware platform. Based on this understanding, the technical solution of the embodiments of the present disclosure may be embodied in a form of software product which may be stored in a non-volatile storage medium (such as CD-ROM, flash disk, or mobile hard disk, etc.) and which may include a series of instructions to enable a computer device (such as a personal computer, a server, or a network device, etc.) to implement the method described in the embodiments of the present disclosure.

It can be understood by those skilled in the art that, the accompany drawings are only illustrative diagrams for the preferred embodiments, and the modules or the procedures in these drawings may not be necessary for implementing the present disclosure.

It can be understood by those skilled in the art that, the modules in the device of the embodiment may be distributed in the device according to the description of the embodiments, or may be correspondingly varied to be contained in one or more device other than that of this embodiment. The modules in the above embodiments may be combined as one module, or may be further divided into several sub-modules.

The aforementioned sequence numbers of the embodiments of the present disclosure is merely for description purpose, not representing the superiority or inferiority of the embodiments.

It is obvious that those skilled in the art may make various modifications and variation to the present disclosure without departing the scope of the present disclosure. Accordingly, if such modification and variation fall within the scope of the claims of the present application or equivalents thereof, the present application intends to embrace such modification and variation.

**Claims**

**1.** A method for controlling rotation of a screen, the method comprising:

when a screen of a mobile terminal enters a full-screen display state, locking (S101) a screen-display direction of the mobile terminal, and acquiring an initial posture of the mobile terminal as a reference posture, wherein the screen-display direction of the mobile terminal comprises one of a forward vertical screen, a leftward horizontal screen, a backward vertical screen and a rightward horizontal screen;

determining (S202) a correction value, mFixOrientation, for a screen-display direction identifier of the mobile terminal based on the initial posture of the mobile terminal;

monitoring (S102, S203) a real-time posture of the mobile terminal in real time; determining (S204) a real-time screen display direction identifier of the mobile terminal according to the real-time posture;

correcting (S204) the real-time screen-display direction identifier of the mobile terminal according to the correction value, to obtain a corrected real-time screen-display direction identifier; and

using the correction value to determine (S103) whether or not to rotate the screen-display direction of the screen of the mobile terminal by comparing the real-time posture and the initial posture using mCurrentOrientation = (mCurrentOrientation + mFixOrientation) % 4;

wherein mCurrentOrientation on the left of the equation denotes the corrected real-time screen-display direction identifier and mCurrentOrientation on the right of the equation denotes the real-time screen-display direction identifier obtained by the system; and

when the corrected real-time screen-display direction identifier is different from the screen-display direction identifier before the correcting, rotating a direction of the screen of the mobile terminal according to a direction identified by the corrected real-time screen-display direction identifier.

2. The method according to claim 1, **characterized in that**, the initial posture or the real-time posture of the mobile terminal is expressed by gravity acceleration components of the mobile terminal in X and Y directions; and the acquiring an initial posture of the mobile terminal is performed by:

acquiring and recording gravity acceleration components X0 and Y0 of the mobile terminal in the X and Y directions, and determining the initial posture of the mobile terminal according to X0 and Y0, wherein, when the mobile terminal is positioned horizontally, the X direction is a horizontally rightward direction along the mobile terminal, and the Y direction is a horizontally frontward direction along the mobile terminal.

3. The method according to claim 2, **characterized in that**, the monitoring a real-time posture of the mobile terminal is performed in real time by:

monitoring gravity acceleration components X1 and Y1 of the mobile terminal in the X and Y directions in real time; and determining the real-time posture of the mobile terminal according to X1 and Y1.

4. The method according to any one of the preceding claims, wherein entering a full-screen display state includes one of: entering a large-picture viewing mode, entering a full-screen game mode, and entering a mode for browsing a webpage in full-screen.

5. A device for controlling rotation of a screen, the device comprising:

a posture acquiring module (301), configured to, when a screen of a mobile terminal enters a full-screen display state, lock a screen-display direction of the mobile terminal, and acquire an initial posture of the mobile terminal as a reference posture, wherein the screen-display direction of the mobile terminal comprises one of a forward vertical screen, a leftward horizontal screen, a backward vertical screen and a rightward horizontal screen;

a correction-value acquiring module (304), configured to, after the acquiring module acquires the initial posture of the mobile terminal, determine a correction value, mFixOrientation, for a screen-display direction identifier of the mobile terminal according to the initial posture of the mobile terminal

a monitoring module (302), configured to monitor a real-time posture of the mobile terminal in real time;

an identifier acquiring unit (3031), configured to determine a real-time screen-display direction identifier of the mobile terminal according to the real-time posture;

a correcting unit (3032), configured to correct the real-time screen-display direction identifier of the mobile terminal according to the correction value, to obtain a corrected real-time screen-display direction identifier; and

a controlling module (303), configured to use the correction value and determine whether or not to rotate the screen-display direction of the screen of the mobile terminal by comparing the real-time posture and the initial posture using mCurrentOrientation = (mCurrentOrientation + mFixOrientation) % 4;

wherein mCurrentOrientation on the left of the equation denotes the corrected real-time screen-display direction identifier and mCurrentOrientation on the right of the equation denotes the real-time screen-display direction identifier obtained by the system; and

a rotating unit (3033) configured to, when the corrected real-time screen-display direction identifier is different from the screen-display direction identifier before the correcting, rotate a direction of the screen of the mobile terminal according to a direction identified by the corrected real-time screen-display direction identifier.

6. The device according to claim 5, **characterized in that**, the initial posture or the real-time posture of the mobile terminal is expressed by gravity acceleration components of the mobile terminal in X and Y directions; and the posture acquiring module comprises:

a locking unit (3011), configured to, when the screen of the mobile terminal enters the full-screen display state, lock the screen-display direction of the mobile terminal; and
a posture acquiring unit (3012), configured to acquire and record gravity acceleration components X0 and Y0 of the mobile terminal in the X and Y directions, and determine the initial posture of the mobile terminal according to X0 and Y0,
wherein, when the mobile terminal is positioned horizontally, the X direction is a horizontally rightward direction along the mobile terminal, and the Y direction is a horizontally frontward direction along the mobile terminal.

7. The device according to claim 6, **characterized in that**, the monitoring module comprises:

a gravity-acceleration-component acquiring unit (3021), configured to monitor gravity acceleration components X1 and Y1 of the mobile terminal in the X and Y directions in real time; and
a real-time-posture determining unit (3022), configured to determine the real-time posture of the mobile terminal according to X1 and Y1.

8. The device according to any of claims 6 to 8, wherein entering a full screen display state includes one of: entering a large-picture viewing mode, entering a full-screen game mode, and entering a mode for browsing a webpage in full-screen.

9. A computer program, which when executed on a processor of a mobile terminal for controlling rotation of a screen, performs a method according to any one of claims 1 to 4.

**Patentansprüche**

1. Verfahren zum Steuern der Drehung eines Bildschirms, wobei das Verfahren Folgendes aufweist:

wenn ein Bildschirm eines mobilen Endgeräts in einen Vollbildanzeigezustand übergeht, Sperren (S101) einer Bildschirmanzeigerichtung des mobilen Endgeräts und Erfassen einer anfänglichen Stellung des mobilen Endgeräts als eine Referenzstellung, wobei die Bildschirmanzeigerichtung des mobilen Endgeräts einen der Folgenden aufweist: einen nach vorn vertikalen Bildschirm, einen nach links horizontalen Bildschirm, einen nach hinten vertikalen Bildschirm und einen nach rechts horizontalen Bildschirm;
Bestimmen (S202) eines Korrekturwerts, mFixOrientation, für eine Bildschirmanzeigerichtungskennung des mobilen Endgeräts auf Basis der anfänglichen Stellung des mobilen Endgeräts;
Überwachen (S102, S203) einer Echtzeit-Stellung des mobilen Endgeräts in Echtzeit;
Bestimmen (S204) einer Echtzeit-Bildschirmanzeigerichtungskennung des mobilen Endgeräts gemäß der Echtzeit-Stellung;
Korrigieren (S204) der Echtzeit-Bildschirmanzeigerichtungskennung des mobilen Endgeräts gemäß dem Korrekturwert zum Erhalten einer korrigierten Echtzeit-Bildschirmanzeigerichtungskennung; und
Verwenden des Korrekturwerts zum Bestimmen (S103), ob die Bildschirmanzeigerichtung des Bildschirms des mobilen Endgeräts gedreht werden soll oder nicht, durch Vergleichen der Echtzeit-Stellung und der anfänglichen Stellung unter Verwendung von mCurrentOrientation = (mCurrentOrientation + mFixOrientation)%4;
wobei mCurrentOrientation auf der linken Seite der Gleichung die korrigierte Echtzeit-Bildschirmanzeigerichtungskennung bezeichnet und mCurrentOrientation auf der rechten Seite der Gleichung die vom System erhaltene Echtzeit-Bildschirmanzeigerichtungskennung bezeichnet; und,
wenn die korrigierte Echtzeit-Bildschirmanzeigerichtungskennung von der Echtzeit-Bildschirmanzeigerichtungskennung vor der Korrektur verschieden ist, Drehen einer Richtung des Bildschirms des mobilen Endgeräts gemäß einer durch die korrigierte Echtzeit-Bildschirmanzeigerichtungskennung gekennzeichneten Richtung.

2. Verfahren nach Anspruch 1, **dadurch gekennzeichnet, dass** die anfängliche Stellung oder die Echtzeit-Stellung des mobilen Endgeräts durch Gravitationsbeschleunigungskomponenten des mobilen Endgeräts in X- und Y-Richtung ausgedrückt wird; und

das Erfassen einer anfänglichen Stellung des mobilen Endgeräts durchgeführt wird durch:

Erfassen und Aufzeichnen von Gravitationsbeschleunigungskomponenten X0 und Y0 des mobilen Endgeräts in der X- und der Y-Richtung und Bestimmen der anfänglichen Stellung des mobilen Endgeräts gemäß X0 und Y0, wobei, wenn das mobile Endgerät horizontal positioniert ist, die X-Richtung eine Richtung horizontal nach rechts am mobilen Endgerät entlang ist und die Y-Richtung eine Richtung horizontal nach vorn am mobilen Endgerät entlang ist.

3. Verfahren nach Anspruch 2, **dadurch gekennzeichnet, dass** das Überwachen einer Echtzeit-Stellung des mobilen Endgeräts in Echtzeit durchgeführt wird durch:

Überwachen von Gravitationsbeschleunigungskomponenten X1 und Y1 des mobilen Endgeräts in der X- und der Y-Richtung in Echtzeit; und

Bestimmen der Echtzeit-Stellung des mobilen Endgeräts gemäß X1 und Y1.

4. Verfahren nach einem der vorhergehenden Ansprüche, wobei das Übergehen in einen Vollbildanzeigezustand eines von dem Übergehen in einen Großbildanzeigemodus, dem Übergehen in einen Vollbild-Spielmodus und dem Übergehen in einen Modus zum Durchstöbern einer Internetseite im Vollbild aufweist.

5. Vorrichtung zum Steuern der Drehung eines Bildschirms, wobei die Vorrichtung Folgendes aufweist:

ein Stellungserfassungsmodul (301), das konfiguriert ist zum Sperren einer Bildschirmanzeigerichtung des mobilen Endgeräts und Erfassen einer anfänglichen Stellung des mobilen Endgeräts als eine Referenzstellung, wenn ein Bildschirm eines mobilen Endgeräts in einen Vollbildanzeigezustand übergeht, wobei die Bildschirmanzeigerichtung des mobilen Endgeräts einen der Folgenden aufweist: einen nach vorn vertikalen Bildschirm, einen nach links horizontalen Bildschirm, einen nach hinten vertikalen Bildschirm und einen nach rechts horizontalen Bildschirm;

ein Korrekturwerterfassungsmodul (304), das konfiguriert ist zum Bestimmen eines Korrekturwerts, mFixOrientation, für eine Bildschirmanzeigerichtungskennung des mobilen Endgeräts gemäß der anfänglichen Stellung des mobilen Endgeräts, nachdem das Erfassungsmodul die anfängliche Stellung des mobilen Endgeräts erfasst hat;

ein Überwachungsmodul (302), das konfiguriert ist zum Überwachen einer Echtzeit-Stellung des mobilen Endgeräts in Echtzeit;

ein Kennungserfassungsmodul (303), das konfiguriert ist zum Bestimmen einer Echtzeit-Bildschirmanzeigerichtungskennung des mobilen Endgeräts gemäß der Echtzeit-Stellung;

eine Korrektureinheit (3032), die konfiguriert ist zum Korrigieren der Echtzeit-Bildschirmanzeigerichtungskennung des mobilen Endgeräts gemäß dem Korrekturwert zum Erhalten einer korrigierten Echtzeit-Bildschirmanzeigerichtungskennung; und

ein Steuermodul (303), das konfiguriert ist zum Verwenden des Korrekturwerts und Bestimmen, ob die Bildschirmanzeigerichtung des Bildschirms des mobilen Endgeräts gedreht werden soll oder nicht, durch Vergleichen der Echtzeit-Stellung und der anfänglichen Stellung unter Verwendung von mCurrentOrientation = (mCurrentOrientation + mFixOrientation)%4;

wobei mCurrentOrientation auf der linken Seite der Gleichung die korrigierte Echtzeit-Bildschirmanzeigerichtungskennung bezeichnet und mCurrentOrientation auf der rechten Seite der Gleichung die vom System erhaltene Echtzeit-Bildschirmanzeigerichtungskennung bezeichnet; und,

eine Dreheinheit (3033), die konfiguriert ist zum Drehen einer Richtung des Bildschirms des mobilen Endgeräts gemäß einer durch die korrigierte Echtzeit-Bildschirmanzeigerichtungskennung gekennzeichneten Richtung, wenn die korrigierte Echtzeit-Bildschirmanzeigerichtungskennung von der Echtzeit-Bildschirmanzeigerichtungskennung vor der Korrektur verschieden ist.

6. Vorrichtung nach Anspruch 5, **dadurch gekennzeichnet, dass** die anfängliche Stellung oder die Echtzeit-Stellung des mobilen Endgeräts durch Gravitationsbeschleunigungskomponenten des mobilen Endgeräts in X- und Y-Richtung ausgedrückt wird; und

das Stellungserfassungsmodul Folgendes aufweist:

eine Sperreinheit (3011), die konfiguriert ist zum Sperren der Bildschirmanzeigerichtung des mobilen Endgeräts, wenn der Bildschirm des mobilen Endgeräts in den Vollbildanzeigezustand übergeht; und
eine Stellungserfassungseinheit (3012), die konfiguriert ist zum Erfassen und Aufzeichnen von Gravitationsbeschleunigungskomponenten X0 und Y0 des mobilen Endgeräts in der X- und der Y-Richtung und Bestimmen der anfänglichen Stellung des mobilen Endgeräts gemäß X0 und Y0,
wobei, wenn das mobile Endgerät horizontal positioniert ist, die X-Richtung eine Richtung horizontal nach rechts am mobilen Endgerät entlang ist und die Y-Richtung eine Richtung horizontal nach vorn am mobilen Endgerät entlang ist.

7. Vorrichtung nach Anspruch 6, **dadurch gekennzeichnet, dass** das Überwachungsmodul Folgendes aufweist:

eine Gravitationsbeschleunigungskomponenten-Erfassungseinheit (3021), die konfiguriert ist zum Überwachen von Gravitationsbeschleunigungskomponenten X1 und Y1 des mobilen Endgeräts in der X- und der Y-Richtung in Echtzeit; und
eine Echtzeit-Stellungsbestimmungseinheit (3022), die konfiguriert ist zum Bestimmen der Echtzeit-Stellung des mobilen Endgeräts gemäß X1 und Y1.

8. Vorrichtung nach einem der Ansprüche 6 bis 8, wobei das Übergehen in einen Vollbildanzeigezustand eines der Folgenden aufweist: Übergehen in einen Großbildanzeigemodus, Übergehen in einen Vollbild-Spielemodus und Übergehen in einen Modus zum Durchstöbern einer Internetseite im Vollbild.

9. Computerprogramm, das bei Ausführung in einem Prozessor eines mobilen Endgeräts zum Steuern der Drehung eines Bildschirms ein Verfahren nach einem der Ansprüche 1 bis 4 durchführt.

**Revendications**

1. Procédé de commande de la rotation d'un écran, le procédé comprenant :

lorsqu'un écran d'un terminal mobile entre dans un état d'affichage plein écran, verrouiller (S101) une direction d'affichage sur écran du terminal mobile et acquérir une position initiale du terminal mobile en tant que position de référence, où la direction d'affichage sur écran du terminal mobile comprend l'un d'entre un écran vertical vers l'avant, un écran horizontal vers la gauche, un écran vertical vers l'arrière et un écran horizontal vers la droite ;
déterminer (S202) un valeur de correction, mFixOrientation, pour un identificateur de direction d'affichage sur écran du terminal mobile sur la base de la position initiale du terminal mobile ;
contrôler (S102, S203) une position en temps réel du terminal mobile en temps réel ;
déterminer (S204) un identificateur de direction d'affichage sur écran en temps réel du terminal mobile conformément à la position en temps réel ;
corriger (S204) l'identificateur de direction d'affichage sur écran en temps réel du terminal mobile conformément à la valeur de correction, pour obtenir un identificateur de direction d'affichage sur écran en temps réel corrigé ; et
utiliser la valeur de correction pour déterminer (S103) si effectuer ou non la rotation de la direction d'affichage sur écran de l'écran du terminal mobile en comparant la position en temps réel et la position initiale en utilisant mCurrentOrientation = (mCurrentOrientation + mFixOrientation) % 4 ;
où mCurrentOrientation sur la gauche de l'équation dénote l'identificateur de direction d'affichage sur écran en temps réel corrigé et mCurrentOrientation sur la droite de l'équation dénote l'identificateur de direction d'affichage sur écran en temps réel obtenu par le système ; et
lorsque l'identificateur de direction d'affichage sur écran en temps réel corrigé est différent de l'identificateur de direction d'affichage sur écran avant la correction, effectuer la rotation d'une direction de l'écran du terminal mobile conformément à une direction identifiée par l'identificateur de direction d'affichage sur écran en temps réel corrigé.

2. Procédé selon la revendication 1, **caractérisé en ce que**, la position initiale ou la position en temps réel du terminal mobile est exprimée par des composantes d'accélération gravitationnelle du terminal mobile dans les directions X et Y ; et
l'acquisition d'une position initiale du terminal mobile est effectuée en :

acquérant et en enregistrant les composantes X0 et Y0 d'accélération gravitationnelle du terminal mobile dans les directions X et Y, et en déterminant la position initiale du terminal mobile conformément à X0 et Y0,

où, lorsque le terminal mobile est positionné horizontalement, la direction X est une direction horizontalement vers la droite le long du terminal mobile, et la direction Y est une direction horizontalement vers l'avant le long du terminal mobile.

3. Procédé selon la revendication 2, **caractérisé en ce que**, contrôler une position en temps réel du terminal mobile est effectué en temps réel en :

contrôlant les composantes X1 et Y1 d'accélération gravitationnelle du terminal mobile dans les directions X et Y en temps réel ; et en

déterminant la position en temps réel du terminal mobile conformément à X1 et Y1.

4. Procédé selon l'une quelconque des revendications précédentes, dans lequel entrer un état d'affichage plein écran comprend l'un d'entre : entrer un mode de visionnement grande image, entrer un mode de jeu plein écran et entrer un mode de navigation de page Web en plein écran.

5. Dispositif de commande de la rotation d'un écran, le dispositif comprenant :

un module d'acquisition de position (301), configuré pour, lorsqu'un écran d'un terminal mobile entre dans un état d'affichage plein écran, verrouiller une direction d'affichage sur écran du terminal mobile, et acquérir une position initiale du terminal mobile en tant que position de référence, où la direction d'affichage sur écran du terminal mobile comprend l'un d'entre un écran vertical vers l'avant, un écran horizontal vers la gauche, un écran vertical vers l'arrière et un écran horizontal vers la droite ;

un module d'acquisition de valeur de correction (304), configuré pour, après que le module d'acquisition eut acquis la position initiale du terminal mobile, déterminer une valeur de correction, mFixOrientation, pour un identificateur de direction d'affichage sur écran du terminal mobile conformément à la position initiale du terminal mobile ;

un module de contrôle (302), configuré pour contrôler une position en temps réel du terminal mobile en temps réel ;

une unité d'acquisition d'identificateur (3031), configurée pour déterminer un identificateur de direction d'affichage sur écran en temps réel du terminal mobile conformément à la position en temps réel ;

une unité de correction (3032), configurée pour corriger l'identificateur de direction d'affichage sur écran en temps réel du terminal mobile conformément à la valeur de correction, pour obtenir un identificateur de direction d'affichage sur écran en temps réel corrigé ; et

un module de commande (303), configuré pour utiliser la valeur de correction et déterminer si effectuer ou non la rotation de la direction d'affichage sur écran de l'écran du terminal mobile en comparant la position en temps réel et la position initiale en utilisant mCurrentOrientation = (mCurrentOrientation + mFixOrientation) % 4 ;

où mCurrentOrientation sur la gauche de l'équation dénote l'identificateur de direction d'affichage sur écran en temps réel corrigé et mCurrentOrientation sur la droite de l'équation dénote l'identificateur de direction d'affichage sur écran en temps réel obtenu par le système ; et

un unité de rotation (3033) configurée pour, lorsque l'identificateur de direction d'affichage sur écran en temps réel corrigé est différent de l'identificateur de direction d'affichage sur écran avant la correction, effectuer la rotation d'une direction de l'écran du terminal mobile conformément à une direction identifiée par l'identificateur de direction d'affichage sur écran en temps réel corrigé.

6. Dispositif selon la revendication 5, **caractérisé en ce que**, la position initiale ou la position en temps réel du terminal mobile est exprimée par des composantes d'accélération gravitationnelle du terminal mobile dans les directions X et Y ; et

le module d'acquisition de position comprend :

une unité de verrouillage (3011), configurée pour, lorsque l'écran du terminal mobile entre dans l'état d'affichage plein écran, verrouiller la direction d'affichage sur écran du terminal mobile ; et

une unité d'acquisition de position (3012), configurée pour acquérir et enregistrer les composantes X0 et Y0 d'accélération gravitationnelle du terminal mobile dans les directions X et Y, et déterminer la position initiale du terminal mobile conformément à X0 et Y0,

où, lorsque le terminal mobile est positionné horizontalement, la direction X est une direction horizontalement vers la droite le long du terminal mobile, et la direction Y est une direction horizontalement vers l'avant le long du terminal mobile.

**7.** Dispositif selon la revendication 6, **caractérisé en ce que**, le module de contrôle comprend :

une unité d'acquisition de composantes d'accélération gravitationnelle (3021), configurée pour contrôler les composantes X1 et Y1 d'accélération gravitationnelle du terminal mobile dans les directions X et Y en temps réel ; et
une unité de détermination de position en temps réel (3022), configurée pour déterminer la position en temps réel du terminal mobile conformément à X1 et Y1.

**8.** Dispositif selon l'une quelconque des revendications 6 à 8, dans lequel entrer un état d'affichage plein écran comprend l'un d'entre : entrer un mode de visionnement grande image, entrer un mode de jeu plein écran et entrer un mode de navigation de page Web en plein écran.

**9.** Programme informatique, qui lorsque exécuté sur un processeur d'un terminal mobile pour commander la rotation d'un écran, met en oeuvre un procédé selon l'une quelconque des revendications 1 à 4.

When a screen of a mobile terminal enters a full-screen display state, locking a screen-display direction of the mobile terminal, and acquiring an initial posture of the mobile terminal — S101

Monitoring a real-time posture of the mobile terminal in real time — S102

Determining a rotation direction of the screen of the mobile terminal by comparing the real-time posture and the initial posture — S103

Fig.1

When a large-picture mode for viewing a picture is entered, acquiring a current posture of the mobile phone as an initial posture — S201

Determining a correction value for a screen-layout-style identifier according to the initial posture of the mobile phone — S202

Monitoring a real-time posture of the mobile phone in real time — S203

Acquiring a real-time screen-display-direction identifier corresponding to the real-time posture of the mobile phone, and correcting the real-time screen-display-direction identifier with the correction value, to obtain a corrected real-time screen-display-direction identifier — S204

Determining a current screen-display direction according to the corrected real-time screen-display-direction identifier — S205

Fig.2

Fig.3

Fig.4

Fig.5

Fig.6

Recording an initial
posture upon
hitting to enter a
large-picture mode

Fig.7

Fig.8

Fig.9

Fig.10

Posture acquiring module — 301

Monitoring module — 302

Controlling module — 303

Fig.11

Locking unit — 3011

Posture acquiring unit — 3012

Fig.12

Gravity-acceleration-component acquiring unit — 3021

Real-time-posture determining unit — 3022

Fig.13

Posture acquiring
module — 301

Correction-value
acquiring module — 304

Monitoring module — 302

Controlling module — 303

Fig.14

Identifier acquiring unit — 3031

Correcting unit — 3032

Rotating unit — 3033

Fig.15

**EP 2 998 848 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2383627 A